# EUROPEAN PATENT SPECIFICATION

(11) **EP 4 539 451 B1**
(45) Date of publication and mention of the grant of the patent: **28.10.2026**
(21) Application number: 23841938.6
(22) Date of filing: 06.06.2023
(51) Int. Cl.: H04N 7/15

(54) **METHOD FOR LIFTING SPEAKING BAN AT VIDEO CONFERENCE, AND DEVICE AND COMPUTER-READABLE STORAGE MEDIUM**
VERFAHREN ZUM ANHEBEN DES SPRECHVERBOTS BEI EINER VIDEOKONFERENZ SOWIE VORRICHTUNG UND COMPUTERLESBARES SPEICHERMEDIUM
PROCÉDÉ DE LEVÉE D'INTERDICTION DE PAROLE DANS UNE VIDÉOCONFÉRENCE, ET DISPOSITIF ET SUPPORT DE STOCKAGE LISIBLE PAR ORDINATEUR

(30) Priority: 18.07.2022 CN 202210841542
(43) Date of publication of application: 16.04.2025
(73) Proprietor: ZTE Corporation, Shenzhen, Guangdong 518057 (CN)
(72) Inventor: LIU, Heng, Shenzhen, Guangdong 518057 (CN); XIA, Xianfeng, Shenzhen, Guangdong 518057 (CN); YU, Xiangyang, Shenzhen, Guangdong 518057 (CN); LIU, Yu, Shenzhen, Guangdong 518057 (CN); DI, Xu, Shenzhen, Guangdong 518057 (CN)
(74) Representative: Ziebig Hengelhaupt Intellectual Property Attorneys Patentanwaltskanzlei PartGmbB
(86) International application number: PCT/CN2023/098610
(87) International publication number: WO 2024/016871

(56) References cited:
- CN-A- 105 721 178
- CN-A- 112 751 849
- CN-A- 113 489 736
- CN-A- 113 489 736
- JP-A- 2004 015 183
- US-A1- 2002 033 880
- US-A1- 2015 139 043
- BARNES NORTEL C BOULTON NS-TECHNOLOGIES L MINIERO S P ROMANO UNIVERSITY OF NAPOLI M: "Centralized Conferencing Manipulation Protocol (CCMP) Call Flow Examples; draft-ietf-xcon-examples-00.txt", CENTRALIZED CONFERENCING MANIPULATION PROTOCOL (CCMP) CALL FLOW EXAMPLES; DRAFT-IETF-XCON-EXAMPLES-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. xcon, 6 July 2009 (2009-07-06), XP015063201
- ROMANO SIMON: "UMPIRE: a universal moderator for the participation in IETF remote events", IEEE COMMUNICATIONS MAGAZINE, IEEE SERVICE CENTER, PISCATAWAY, US, vol. 53, no. 4, 1 April 2015 (2015-04-01), pages 234 - 239, XP011577585, ISSN: 0163-6804, [retrieved on 20150406], DOI: 10.1109/MCOM.2015.7081100
- "Virtual meeting room management for multimedia conferencing audiovisual control", ITU-T DRAFT ; STUDY PERIOD 2013-2016, INTERNATIONAL TELECOMMUNICATION UNION, GENEVA ; CH, 13 November 2015 (2015-11-13), pages 1 - 142, XP044144855
- "3rd Generation Partnership Project; Technical Specification Group Services and System Aspects; Multimedia telephony over IP Multimedia Subsystem (IMS); Media Handling Aspects of Multi-stream Multiparty Conferencing for MTSI (Release 13)", 21 October 2015 (2015-10-21), XP051037098, Retrieved from the Internet <URL:http://www.3gpp.org/ftp/tsg_sa/WG4_CODEC/TSGS4_86/Docs/> [retrieved on 20151021]

## Description

### TECHNICAL FIELD

The present application relates to, but is not limited to, the field of video conference technology, in particular to a method for lifting a speaking ban at a video conference, and a device and a computer-readable storage medium.

### BACKGROUND

Video conference refers to a conference where people located at two or more locations engage in face-to-face conversations by communication devices and networks. Depending on the number of participating locations, video conference can be classified into point-to-point conference and multi-point conference. At present, due to the needs of social development, video conference is increasingly used in various occasions, especially multi-person conference such as lecture and training, moreover, in a multi-person conference, a plurality of persons participate in a video conference by their own terminals, as a result, a multi-person conference is typically set as a multi-point conference. However, for commonly used video conference terminals at present, after a conference participant joins a conference, once a speaking ban is imposed on the participant by an operator of the terminal at the chairman end, the participant cannot make voice speaking via the terminal unless privately sending a message to the terminal at the chairman end to request to lift the speaking ban, which is inconvenient to operate. If a plurality of persons apply to lift the speaking ban, the operator of the terminal at the chairman end needs to spend a lot of time on frequent operation, which affects the efficiency of the conference.

Chinese patent application CN 113 489 736 A discloses a method of operating a multimedia conference. A plurality of terminals are connected via a server. A conference initiating terminal sends, via the server, a muting instruction to a plurality of participating terminals which are then muted. If a muted terminal needs to transmit audio during the conference, it can send a muting release request to the server which forwards the muting release request to the conference initiating terminal. The conference initiating terminals sends to the requesting terminal via the server a speaking ban release notification to lift the speaking ban for this terminal. Alternatively, unmuting a muted terminal can be initiated at the conference initiating terminal.

### SUMMARY

The following is a summary of the subject matter described herein in detail. This summary is not intended to limit the scope of the claims.

Provided in embodiments of the present application are a method for lifting a speaking ban at a video conference, and a device and a computer-readable storage medium.

In a first aspect, an embodiment of the present application provides a method for lifting a speaking ban at a video conference applied to a multi-point control end, where the multi-point control end is in communication with a chairman end and a plurality of clients, the method includes: receiving a speaking ban request from the chairman end, where the speaking ban request carries permission information which allows the clients to lift a speaking ban; according to the speaking ban request, sending a speaking ban notification to the clients, so as to impose a speaking ban on the clients; and when a speaking ban lifting request is received from a target client, sending a speaking notification to the target client according to the speaking ban lifting request and the permission information, where the target client is one or more of the clients.

In a second aspect, an embodiment of the present application further provides a method for lifting a speaking ban at a video conference, in which a chairman end is in communication with a plurality of clients by a multi-point control end, the method includes: the chairman end sending to the multi-point control end a speaking ban request that carries permission information which allows the clients to lift a speaking ban, such that the multi-point control end sends a speaking notification to a target client according to the permission information and a speaking ban lifting request, where the speaking ban lifting request is from the target client, and the target client is one or more of the clients.

In a third aspect, an embodiment of the present application further provides a method for lifting a speaking ban at a video conference, in which clients are in communication with a chairman end by a multi-point control end, the method includes: receiving at the clients a speaking ban notification sent by the multi-point control end, and imposing speaking ban according to the speaking ban notification, where the speaking ban notification is generated by the multi-point control end according to a speaking ban request, the speaking ban request is sent by the chairman end and carries permission information which allows clients to lift a speaking ban; and when the clients are in the speaking state, sending from the clients a speaking ban lifting request to the multi-point control end; and receiving at the clients a speaking notification which generated by the multi-point control end according to the speaking ban lifting request and the permission information, and lifting the speaking ban according to the speaking notification.

In a fourth aspect, an embodiment of the present application further provides a device for lifting a speaking ban at a video conference, including: a memory, a processor, and a computer program stored in the memory and executable on the processor, the computer program, when executed by the processor, implements one of the following: the method for lifting a speaking ban at a video conference of the first aspect; the method for lifting a speaking ban at a video conference of the second aspect; or the method for lifting a speaking ban at a video conference of the third aspect.

In a fifth aspect, an embodiment of the present application further provides a computer-readable storage medium storing computer-executable instructions, where the computer-executable instructions are used to executes at least one of the following: the method for lifting a speaking ban at a video conference of the first aspect; the method for lifting a speaking ban at a video conference of the second aspect; or the method for lifting a speaking ban at a video conference of the third aspect.

Additional features and advantages of the present application will be set forth in the description that follows, and part of them will be obvious from the description, or may be learned by implementation of the present application. The objectives and other advantages of the present application may be implemented and obtained by the structure particularly pointed out in the description, claims and drawings.

### BRIEF DESCRIPTION OF DRAWINGS

The drawings are used to provide further understanding of technical solution of the present application and constitute a part of the description, and are used to explain technical solution of the present application together with embodiments of the present application, but do not constitute a limitation on technical solution of the present application.
FIG. 1 is a structure diagram of a video conference system of a method for lifting a speaking ban at a video conference in an embodiment of the present application;
FIG. 2 is a schematic flowchart of a method for lifting a speaking ban at a video conference at a multi-point control end in an embodiment of the present application;
FIG. 3 is a schematic flowchart of enabling a function of lifting a speaking ban in an embodiment of the present application;
FIG. 4 is a schematic flowchart of configuring and enabling a function of lifting a speaking ban according to instructions in an embodiment of the present application;
FIG. 5 is a schematic flowchart of recording permission information in an embodiment of the present application;
FIG. 6 is a schematic flowchart of receiving a request for turning on a microphone in an embodiment of the present application;
FIG. 7 is a schematic flowchart of sending a speaking notification in an embodiment of the present application;
FIG. 8 is a schematic flowchart of joining sound-mixing in an embodiment of the present application;
FIG. 9 is a schematic flowchart of disabling a function that allows lifting a speaking ban in an embodiment of the present application;
FIG. 10 is a schematic flowchart of a method for lifting a speaking ban at a video conference at a chairman end in an embodiment of the present application;
FIG. 11 is a schematic flowchart of a method for lifting a speaking ban at a video conference at a client in an embodiment of the present application;
FIG. 12 is a schematic flowchart of turning on a microphone in an embodiment of the present application;
FIG. 13 is an interactive schematic diagram of allowing self-lifting a speaking ban in an embodiment of the present application;
FIG. 14 is an interactive schematic diagram of not allowing self-lifting a speaking ban in an embodiment of the present application;
FIG. 15 is an interactive schematic diagram in which a chairman end lifts a speaking ban in an embodiment of the present application;
FIG. 16 is an interactive schematic diagram in which a client self-lifts a speaking ban in an embodiment of the present application;
FIG. 17 is an interactive schematic diagram of not allowing a client to self-lift a speaking ban in an embodiment of the present application;
FIG. 18 is an interactive schematic diagram in which a chairman end self-lifts a speaking ban in an embodiment of the present application; and
FIG. 19 is an interactive schematic diagram of not allowing a chairman end to self-lift a speaking ban in an embodiment of the present application.

### DETAILED DESCRIPTION

In order to clarify the objectives, technical solutions and advantages of the present application, the present application will be further explained in detail below in conjunction with the accompanying drawings and embodiments. It should be understood that the specific embodiments described here are merely used to illustrate the present application and not intended to be limiting.

It should be noted that although functional modules are divided in a schematic diagram of an apparatus and a logical order is shown in a flow chart, in some cases, the modules can be divided different from the apparatus, or the steps shown or described can be performed in an order different from that in the flow chart. The terms "first", "second", and the like in the description, claims and the drawings are used to distinguish between similar objects rather than necessarily describing a specific order or a sequence.

The terms used in the embodiments of the present application are explained below.

A MCU (Multi Control Unit) is an important component of a video conference system. When a video conference is held across more than two locations, the MCU must connect, allocate, and switch signals from a plurality of locations, and take control of the conference. The MCU, like a switch, serves as a processing point for connecting and exchanging signals as audio, video, data, and signaling of individual video conference terminal devices, and is cascaded with other MCUs.

A GK (Gatekeeper) is an information security device that connects two independent host systems by using a solid state switch read-write medium with a plurality of control functions. Since two independent host systems are isolated by a gatekeeper, there is no physical connection, logical connection or information transmission protocol for communication between these systems, there is no information exchange carried out according to a protocol, and there is only no-protocol-ferrying carried out in the form of a data file. Therefore, a gatekeeper physically isolates and blocks all network connections that may potentially attack an internal network, such that an external attacker cannot directly intrude, attack or destroy the internal network, thereby ensuring security of an internal host.

A gateway (GW) is also known as an inter-network connector, or a protocol converter. The gateway is a complex network interconnection device which implements network interconnection on a network layer, and is used only for network interconnection between two high-layer protocols. A gateway may be used for both wide area network interconnection and local area network interconnection. A gateway is a computer system or device that serves as a conversion hub. When used between different communication protocols, data formats or languages, and even two systems with completely different architectures, a gateway serves as a translator. Unlike a bridge that simply conveys information, a gateway re-packs received information so as to adapt to the requirements of a destination system.

A Router is a hardware device that connects two or more networks and plays a role of a gateway between these networks, and a router is a dedicated intelligent network device that reads an address in each data packet and then determines how to transmit the data packet. It can understand different protocols, for example, the Ethernet protocol used by a certain local area network, and the TCP/IP protocol used by the Internet. In this way, a router can analyze destination addresses of data packets transmitted from networks of various types, and convert a non-TCP/IP network address into a TCP/IP address, or vice versa; individual packets are then routed to a designated location in an optimal path according to a selected routing algorithm. Therefore, a router can connect a non-TCP/IP network to the Internet.

A Wide Area Network (abbreviated as WAN) is also known as an external network or a public network. A WAN is a remote network that connects computers in different local area networks or metropolitan area networks for communication. It usually spans a large physical range, covering a range of tens of kilometers to thousands of kilometers, and it can connect a plurality of regions, cities and countries, or span several continents, and can provide long-distance communication, thereby forming an international long-distance network.

Switched circuit network: circuit switching refers to a process of establishing connections on demand and allowing dedicated connections until they are released. A switched circuit network includes a physical path and supports a single connection between two endpoints during network connection. Conventional voice telephone service implements circuit switching by the public switched telephone network PSTN (rather than voice over IP). A telephone company sets a specific physical path for a user's call number during the user's call, and this path is dedicated to the connection between the two ends.

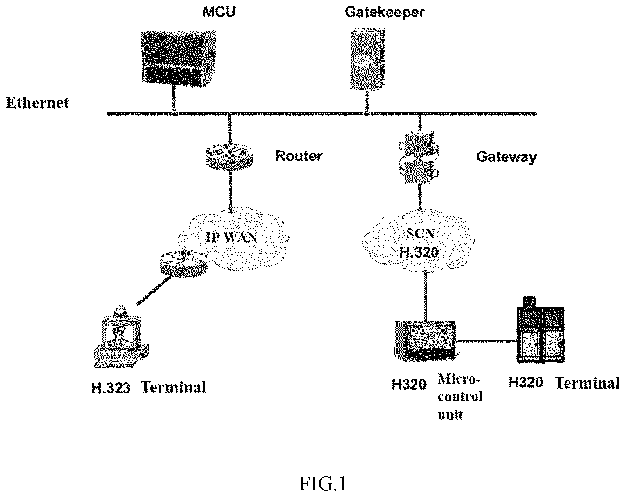

Referring to FIG. 1, a video conference system includes two different terminals, terminal H323 and terminal H320. The terminal H323 can be understood as a chairman end, which is a host or speaker who initiates a video conference; the terminal H320 can be understood as a client, which is an observer who joins a conference and needs to speak in order to speak.

Referring to FIG. 1, the video conference system further includes a MCU, a GK, a GW, and a communication network.

The MCU is the control core of a conference television. When the number of terminals participating in a conference is more than 2, the conference must be controlled by the MCU, image exchange, sound-mixing, and control among terminals are completed by the MCU.

The GK is used to manage the terminal H323, MCU and GW, and it is further used for address translation, bandwidth management, access control, as well as setting optional communication protocol components for the terminal H323.

The GW is used to implement interworking between terminals with different protocols, so as to complete conversion of communication protocols; it is further used to implement conversion of video [H.264/H.263/H.2661], and audio [G.719/G.722.1C/G.722/G.711], etc.

The communication network is used to connect the terminal H323 and the terminal H320 with the MCU, the transmission channel may be an optical fiber, cable, microwave, or satellite, and the communication network may be E1, IP, and ISDN. With the development of TCP/IP based Internet, IP broadband network has become the primary network for carrying video service, therefore, in order to facilitate interconnection with other networks, IP broadband network can be specially selected.

In some cases, after a client joins a multi-point conference, once a speaking ban is imposed on the client by the chairman end, even if the client turns on the microphone during subsequent operations, the client will be only prompted with a message such as "You have been imposed a speaking ban" and cannot speak, which is extremely inconvenient for scenarios with many users, especially video conference scenarios with hundreds or thousands of participants.

On such basis, the embodiments of the present application provide a method for lifting a speaking ban at a video conference, which can automatically lift a speaking ban and improve the efficiency of video conference.

The embodiments of the present application will be further described below in conjunction with the accompanying drawings.

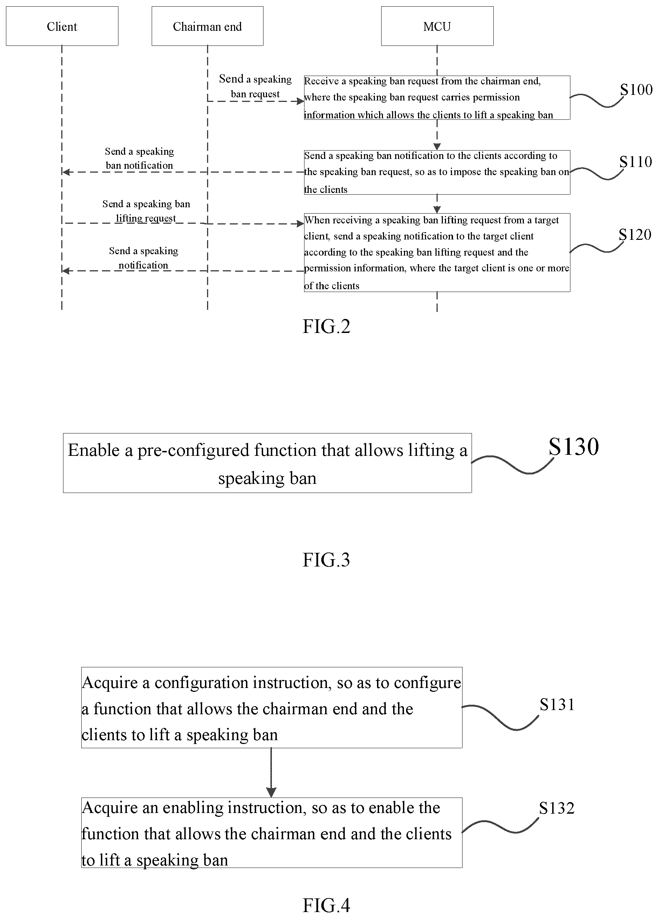

Referring to FIG. 2, an embodiment of the present application provides a method for lifting a speaking ban at a video conference applied to a multi-point control end, where the multi-point control end is in communication with a chairman end and a plurality of clients, the method includes the following steps S100 to S120.

At step S100, a speaking ban request is received from a chairman end, where the speaking ban request carries permission information which allows clients to lift a speaking ban.

At step S110, a speaking ban notification is sent to the clients according to the speaking ban request, so as to impose a speaking ban on the clients.

At step S120, when a speaking ban lifting request is received from a target client, a speaking notification is sent to the target client according to the lifting request and the permission information, where the target client is one or more of the clients.

It should be noted that the multi-point control end can be understood as a MCU.

The embodiment of the present application is applied to the multi-point control end, firstly, the multi-point control end receives the speaking ban request from the chairman end, where the speaking ban request carries permission information which allows the clients to lift the speaking ban; secondly, the multi-point control end sends the speaking ban notification to the clients according to the speaking ban request, so as to impose the speaking ban on the clients; finally, the multi-point control end sends the speaking notification to the target client according to the speaking ban lifting request and the permission information which allows the clients to lift the speaking ban. **In** the embodiment of the present application, when the chairman end sends the speaking ban request to the multi-point control end, the speaking ban request carries permission information which allows clients to lift the speaking ban, in the case where the client needs to lift the speaking ban, the client only needs to send a speaking ban lifting request to the multi-point control end, and the multi-point control end will lift the speaking ban on the corresponding client according to the speaking ban lifting request, there is no need for the chairman end to operate, thereby making the operations convenient and improving conference efficiency.

Referring to FIGs. 3-4, it can be understood that prior to receiving the speaking ban request from the chairman end, the method further includes but is not limited to the following steps.

At step S130, a pre-configured function that allows lifting a speaking ban is enabled.

That the pre-configured function that allows lifting a speaking ban is enabled includes but is not limited to the following steps S131 to S132.

At step S131, a configuration instruction is acquired, so as to configure a function that allows the chairman end and the clients to lift a speaking ban.

At step S132, an enabling instruction is acquired, so as to enable the function that allows the chairman end and the clients to lift a speaking ban.

It should be noted that, on one hand, a configuration item of "allowing a terminal to automatically lift a speaking ban" is newly added to the system configuration, and "Yes" or "No" can be set according to different requirements of video conference; on the other hand, a configuration item of "allowing a terminal to automatically lift a speaking ban" is newly added to a conference template, which is set to follow the configuration of video conference system by default. **In** the case where the configuration item is set to "Yes" in a video conference system, a current video conference terminal is allowed to automatically lift a speaking ban by an operation of turning on a microphone; in the case where the configuration is set to "No" in a video conference system, when a speaking ban is imposed on a current video conference terminal , even if a microphone is turned on, the video conference terminal will only apply to the multi-point control end for speaking, and the multi-point control end will not allow the current video conference terminal to speak, therefore, the current video conference terminal cannot automatically lift a speaking ban by turning on the microphone.

It should be noted that the configuration item of "allowing a terminal to automatically lift a speaking ban" can be changed at any time during a video conference.

It should be noted that the case where the configuration item of "allowing a terminal to automatically lift a speaking ban" is set to "Yes" includes the following.

**In** the case where the microphone is turned on by the terminal, after the message is received by the MCU, the terminal is allowed to speak immediately.

**In** the case where the microphone is turned off by the terminal, after the message is received by the MCU, it is only necessary to display the microphone state on the conference control page but not changing the sound-mixing state.

When a speaking ban is imposed on the terminal, the microphone is turned off by the terminal, and a message "The platform imposes a speaking ban in this conference, and self-lifting the speaking ban is allowed" is displayed on the terminal.

When the terminal is allowed to speak, the terminal will be notified, so as to achieve state synchronization. A message "The platform allows speaking in this conference" is displayed on the terminal.

It should be noted that the case where the configuration item of "allowing a terminal to automatically lift a speaking ban" is set to "No" includes the following.

**In** the case where the microphone is turned on or turned off by the terminal, after the message is received by the MCU, it is only necessary to display the microphone state on the conference control page but not changing the sound-mixing state.

When a speaking ban is imposed on the terminal, a message "The platform imposes a speaking ban in this conference, and lifting of the speaking ban can be applied" is displayed on the terminal.

When the terminal is allowed to speak, a message "The platform allows speaking in this conference" is displayed on the terminal.

It should be noted that the configuration item of "allowing a terminal to automatically lift a speaking ban" can be changed at any time during a conference.

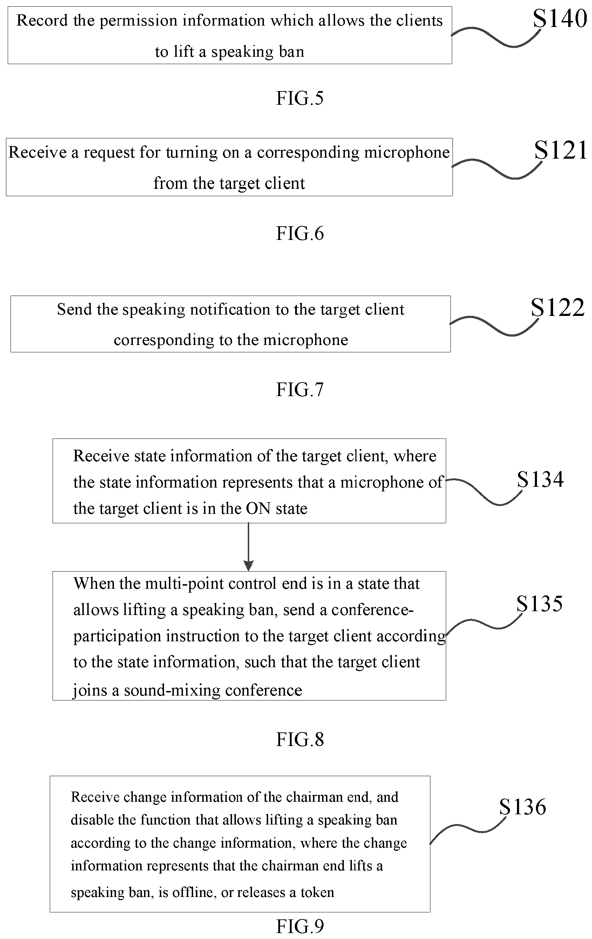

Referring to FIG. 5, it can be understood that after the step S100, that is, after that a speaking ban request is received from a chairman end, the method further includes but is not limited to the following step S140.

At step S140, the permission information which allows clients to lift a speaking ban is recorded.

It should be noted that by recording corresponding permission information, in the case where a client applies for lifting a speaking ban, it is convenient to read the recorded permission information and lift the speaking ban of the client by the permission information.

Referring to FIG. 6, it can be understood that at step S120, that the speaking ban lifting request is received from the target client includes but is not limited to the following step S121.

At step S121: a request for turning on a corresponding microphone is received from the target client.

Referring to FIG. 7, it can be understood that at step S120, that the speaking notification is sent to the target client includes but is not limited to the following step S122.

At step S122: the speaking notification is sent to the target client corresponding to the microphone.

Referring to FIG. 8, it can be understood that the method further includes but is not limited to the following steps S134 to S135:

At step S134: state information of the target client is received, where the state information represents that a microphone of the target client is in the ON state.

At step S135: when the multi-point control end is in the state that allows lifting a speaking ban, a conference-participation instruction is sent to the target client according to the state information, such that the target client joins a sound-mixing conference.

It should be noted that when the multi-point control end is in the state that allows lifting a speaking ban, that is, the function that allows lifting a speaking ban is enabled, the target client can be allowed to join the sound-mixing conference based on the ON state of the microphone, and the efficiency of the conference is improved.

It should be noted that when the state information represents that the microphone of the target client is in the OFF state, after the message is received by the multi-point control end, the multi-point control end only needs to display the ON state of the microphone on the conference control interface but not changing the current state of the sound-mixing conference.

Referring to FIG. 9, it can be understood that the method further includes but is not limited to the following step S136.

At step S136, change information of the chairman end is received, and the function that allows lifting a speaking ban is disabled according to the change information, where the change information represents that the chairman end lifts a speaking ban, is offline, or releases a token.

It should be noted that the function that allows lifting a speaking ban can be disabled by relevant operations of the chairman end, which makes operations more convenient and further improves the efficiency of the conference.

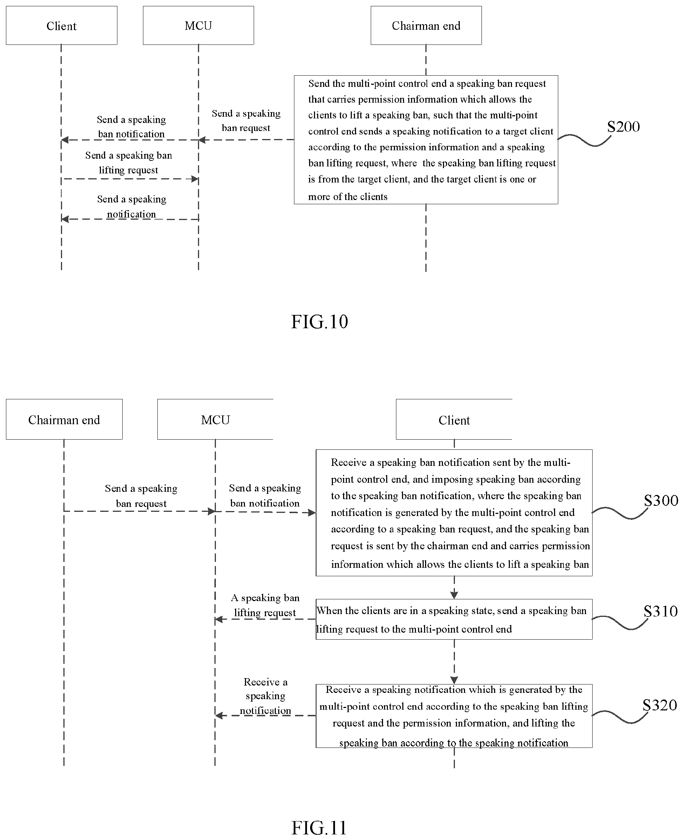

Referring to FIG. 10, an embodiment of the present application provides a method for lifting a speaking ban at a video conference applied to a chairman end, where the chairman end is in communication with a plurality of clients by a multi-point control end, the method includes but is not limited to the following step S200.

At S200, a speaking ban request that carries permission information allows clients to lift a speaking ban which is sent to the multi-point control end, such that the multi-point control end sends a speaking notification to a target client according to the permission information and a speaking ban lifting request, where the speaking ban lifting request is from the target client, and the target client is one or more of the clients.

The embodiment of the present application is applied to the chairman end, firstly, in the case where the chairman end needs to impose a speaking ban on the clients, the chairman end sends the speaking ban request to the multi-point control end, where the speaking ban request carries permission information which allows the clients to lift a speaking ban; secondly, after the multi-point control end receives the speaking ban request, the multi-point control end sends the speaking ban notification to the clients according to the speaking ban request, so as to impose speaking ban on the client; finally, when the multi-point control end receives the speaking ban lifting request from the client, the multi-point control end sends the speaking notification to the target client according to the speaking ban lifting request and the permission information which allows clients to lift the speaking ban, such that the client lifts the speaking ban according to the speaking notification. In the embodiment of the present application, when the chairman end sends the speaking ban request to the multi-point control end, the speaking ban request carries permission information that allows clients to lift a speaking ban, in the case where a client needs to lift the speaking ban, the client only needs to send the speaking ban lifting request to the multi-point control end, and the multi-point control end will lift the speaking ban of the corresponding client according to the speaking ban lifting request, there is no need for the chairman end to operate, thereby making the operations convenient and improving efficiency of conference. Moreover, when a plurality of persons are speaking, the chairman end can impose a speaking ban on some of the clients so as to keep the conference in order, the clients on which a speaking ban is imposed can speak by turning on the microphone by themselves as needed, there is no need for the chairman end to manually lift the speaking ban, which improves the efficiency of conference.

Referring to FIG. 11, an embodiment of the present application provides a method for lifting a speaking ban at a video conference applied to a client, where the client is in communication with a chairman end by a multi-point control end, the method includes but is not limited to the following steps S300 to S320.

At step S300, a speaking ban notification sent by the multi-point control end is received, and the speaking ban is imposed according to the speaking ban notification, where the speaking ban notification is generated by the multi-point control end according to a speaking ban request, and the speaking ban request is sent by the chairman end and carries permission information which allows clients to lift a speaking ban.

At step S310, when the clients are in the speaking state, a speaking ban lifting request is sent to the multi-point control end.

At step S320, a speaking notification which is generated by the multi-point control end according to the speaking ban lifting request and the permission information is received, and the speaking ban is lifted according to the speaking notification.

It should be noted that the speaking state can be understood as a state in which a holder of the client needs to speak.

The embodiment of the present application is applied to clients, firstly, the speaking ban notification sent by the multi-point control end is received, and the speaking ban is imposed according to the speaking ban notification, where the speaking ban notification is generated by the multi-point control end according to the speaking ban request, the speaking ban request is sent by the chairman end and carries permission information which allows clients to lift a speaking ban; secondly, when the client is speaking, that is, the client is in the speaking state, the speaking ban lifting request is sent to the multi-point control end; finally, the speaking notification which is generated by the multi-point control end according to the speaking ban lifting request and the permission information is received by the client, and the client lifts the speaking ban according to the speaking notification. In the embodiment of the present application, the multi-point control end imposes a speaking ban on the client by the speaking ban notification, where the speaking ban notification is generated by the multi-point control end according to the speaking ban request, the speaking ban request is sent by the chairman end and carries permission information which allows clients to lift a speaking ban, in the case where a client needs to lift the speaking ban, it only needs to send a speaking ban lifting request to the multi-point control end, and the multi-point control end will lift the speaking ban of the corresponding client according to the speaking ban lifting request, there is no need for the chairman end to operate, thereby making the operations convenient and improving efficiency of conference.

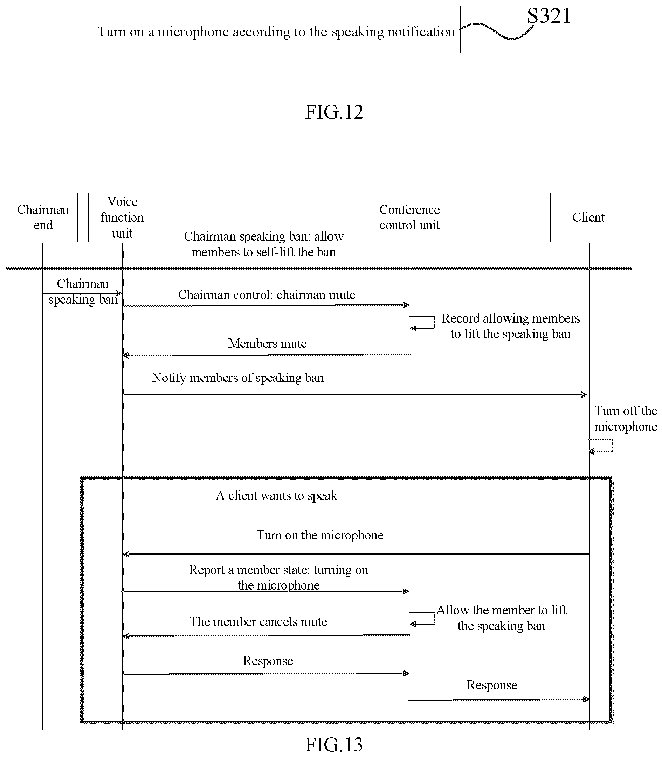

It can be understood that, referring to FIG. 12, that the speaking ban is lifted according to the speaking notification includes the following.

At step S321, a microphone is turned on according to the speaking notification.

With reference to FIGs. 13-15, further explanation will be given on the interaction between the multi-point control end at the chairman end and the client during the process of imposing a speaking ban or lifting a speaking ban in this embodiment of the present application.

Referring to FIG. 13, the multi-point control end includes a voice function unit and a conference control unit. Firstly, the chairman end initiates a speaking ban request based on needs of the conference, the speaking ban request carries permission information which allows clients to lift a speaking ban, moreover, the chairman end imposes a speaking ban on itself; secondly, the voice function unit receives the speaking ban request and transmits the permission information to the conference control unit, the conference control unit records the permission information that allows the clients and chairman end to lift the speaking ban; afterwards, the conference control unit transmits a speaking ban instruction to the voice function unit, and the voice function unit generates a speaking ban notification based on the speaking ban instruction, and sends the speaking ban notification to the client, then the client imposes a speaking ban based on the speaking ban notification.

When a client wants to speak, it sends a request for turning on a microphone to the voice function unit, the voice function unit reports the request, the conference control unit allows the client to lift the speaking ban based on the permission information, and sends the speaking ban lifting instruction to the voice function unit, the voice function unit lifts the speaking ban on the client in response to the speaking ban lifting instruction, then the response information is passed backwards, such that the client is aware that the speaking ban has been lifted, and there are no additional operations at the chairman end. That is, when the terminal represented by the client turns on the microphone, after the MCU receives the message, the terminal can be allowed to speak immediately.

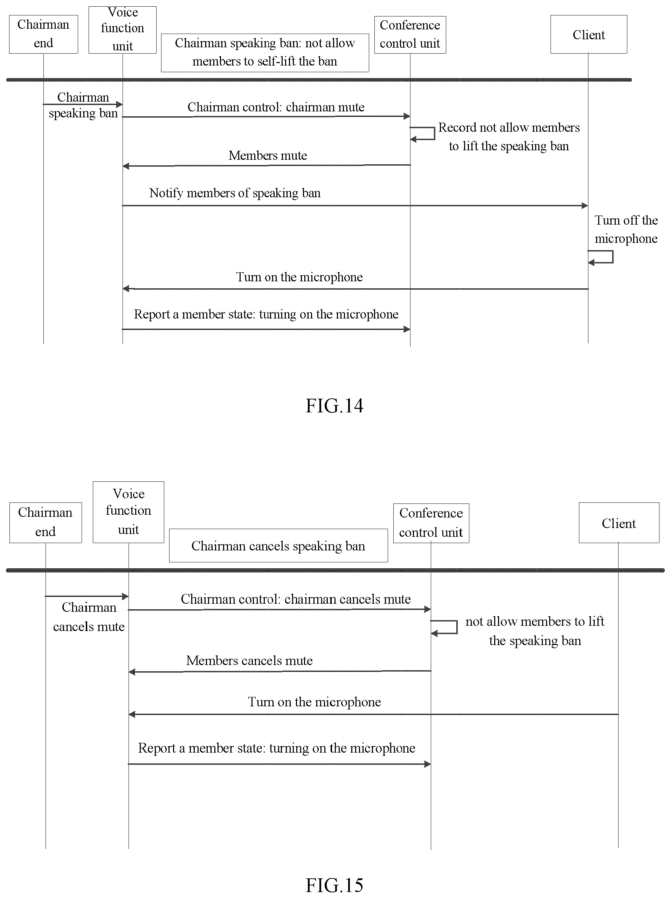

Referring to FIG. 14, different from the process in FIG. 13, when the chairman end initiates a speaking ban request based on the needs of the conference, the speaking ban request does not carry permission information that allows clients to lift the speaking ban, therefore, in subsequent steps, even if a client turns on a microphone, the conference control unit will not allow the client to speak.

Referring to FIG. 15, the chairman end can lift a speaking ban on the client. Firstly, the chairman end sends a request for lifting a speaking ban to the voice function unit, the request for lifting a speaking ban carries permission information that allows a corresponding client to lift a speaking ban, and the chairman end can further self-lift a speaking ban; secondly, the voice function unit receives the permission information that allows the corresponding client to lift the speaking ban, and sends the permission information to the conference control unit, however, the conference control unit itself is configured to not allow the client to lift the speaking ban by itself, a speaking ban lifting instruction is not allowed to send to the voice function unit without permission information of the chairman end; afterwards, when the client sends a request for turning on the microphone, the voice function unit reports the request to the conference control unit, and the conference control unit will lift the speaking ban based on the request for turning on the microphone.

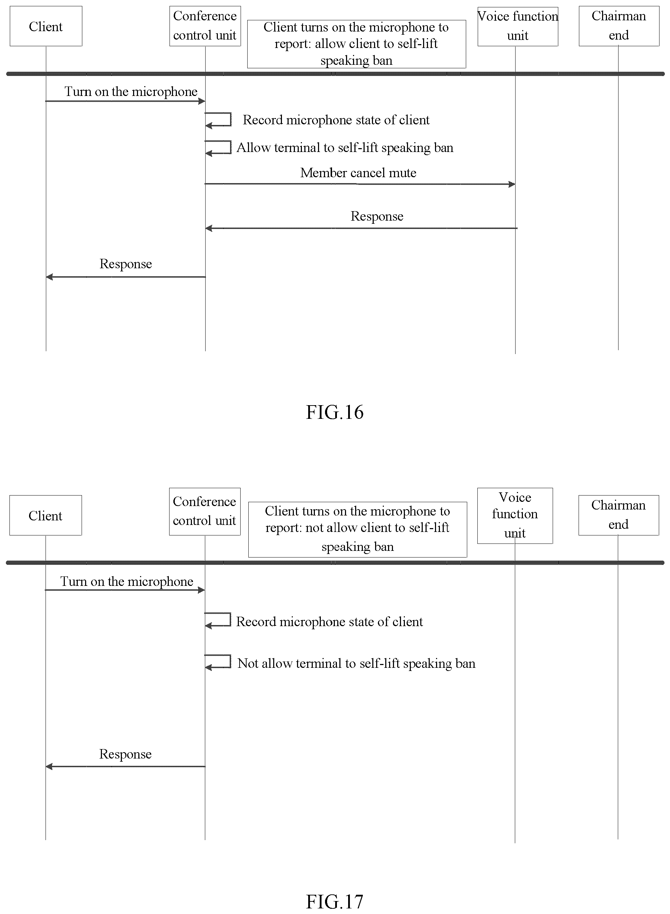

With reference to FIGs. 16-17, further explanation will be given on the interaction between the client and the multi-point control end during the process of imposing a speaking ban or lifting a speaking ban in this embodiment of the present application.

Referring to FIG. 16 and combined with FIG. 13, the client sends a request for turning on the microphone, the conference control unit receives the request and records the microphone state, at the same time, the client is allowed to lift the speaking ban, the conference control unit sends the speaking ban lifting instruction to the voice function unit, the voice function unit sends response information to the conference control unit after lifting the speaking ban, the conference control unit then sends response information to the client, such that the client is aware that the speaking ban has been lifted.

Referring to FIG. 17, different from the operation process in FIG. 16, the conference control unit will not lift the speaking ban on the client, and the response information is a notification that the speaking ban will not be lifted.

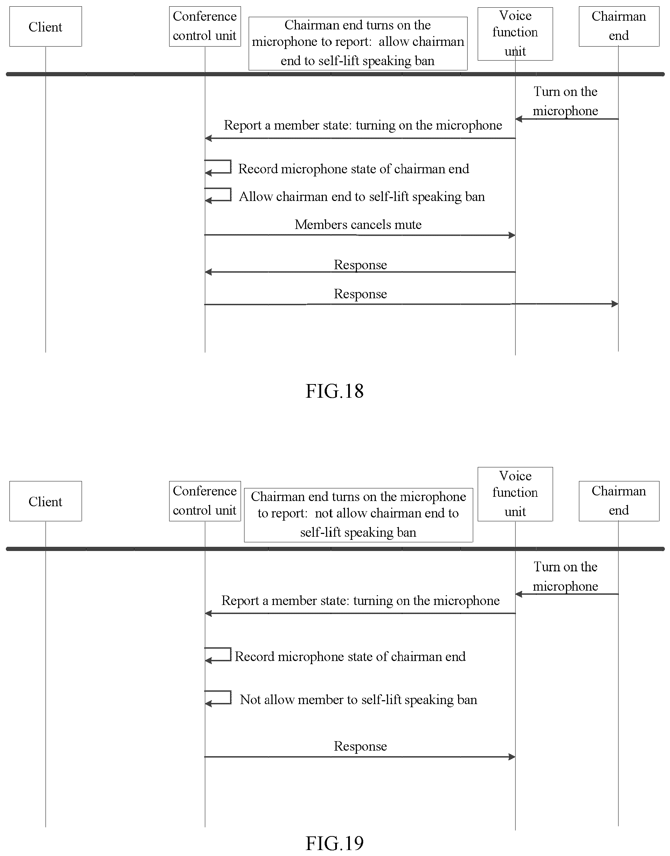

With reference to FIGs. 18-19, further explanation will be given on the interaction between the chairman end and the multi-point control end during the process of imposing a speaking ban or lifting a speaking ban in this embodiment of the present application.

Referring to FIG. 18, in previous steps, the chairman end initiates a speaking ban request based on the needs of the conference, the speaking ban request carries permission information which allows clients and the chairman end to lift a speaking ban; after the chairman end sends a request of turning on the microphone to the voice function unit, the operation process is the same as that in FIG. 14 and will not be repeated here.

Referring to FIG. 19, the chairman end is configured to not allow to lift a speaking ban by itself. When the chairman end is not allowed to lift a speaking ban by itself, the chairman end initiates a speaking ban request that does not carry any relevant permission information based on the needs of the conference. When the chairman end initiates a request for turning on the microphone, and after the conference control unit sends an instruction that does not allow lifting a speaking ban to the voice function unit, the voice function unit will not respond, and the chairman end will not lift the speaking ban by itself.

It should be noted that in order to cooperate with the method for lifting a speaking ban at a video conference of the embodiments of the present application, microphone icons and microphone indicator lights of the terminals represented by the chairman end and client can be adaptively adjusted as the following examples.

When a speaking ban is imposed on the terminal, the microphone icon changes to the speaking ban state and the microphone indicator light turns off.

When the terminal lifts a speaking ban by itself, the microphone icon changes to the pickup state and the microphone indicator light turns on.

When the terminal lifts a speaking ban passively, the microphone icon changes to the silence state and the microphone indicator light turns on.;

The terminal cannot lift the speaking ban by itself but turns on the microphone, the microphone icon remains in the speaking ban state, and the microphone indicator light turns on and then turns off, at the same time, the operation of "applying for speaking" is performed once, the operation of applying to speak is performed once when the microphone is pressed once, but the speaking ban will not be lifted.

It can be understood that the present application further provides a device for lifting a speaking ban at a video conference including: a memory, a processor, and a computer program stored in the memory and executable on the processor, the computer program, when executed by the processor, implements one of the following: the method for lifting a speaking ban at a video conference applied to a multi-point control end; the method for lifting a speaking ban at a video conference applied to a chairman end; or the method for lifting a speaking ban at a video conference applied to a client.

The processor and memory can be connected by a bus or other means.

The memory, as a non-transient computer-readable storage medium, can be used to store non-transitory software programs and non-transitory computer-executable programs. **In** addition, the memory can include a high-speed random access memory, and can also include a non-transitory memory, such as at least one disk storage device, a flash memory device or other non-transitory solid-state storage device. **In** some implementations, the memory can include a memory remotely disposed relative to the processor, and these remote memories can be connected to the processor by a network. Examples of the above-mentioned network include, but are not limited to, the Internet, an intranet, a local area network, a mobile communication network, and combinations thereof.

It should be noted that the non-transitory software programs and instructions required to implement the method for lifting a speaking ban at a video conference in the above embodiments are stored in a memory, the non-transitory software programs and instructions, when executed by a processor, performs the method for lifting a speaking ban at a video conference in the above embodiments, for example, performs the method steps corresponding to FIGs. 2 to 12 described above.

The device embodiments described above are only illustrative, and the units illustrated as separate components may be or may not be physically separated, that is, they may be located in one place or distributed across a plurality of network units. Some or all of the modules can be selected according to actual needs to achieve the objectives of this embodiment.

It can be understood that this present application further provides a computer-readable storage medium storing computer-executable instructions, where the computer-executable instructions are used to executes at least one of the following: the method for lifting a speaking ban at a video conference applied to a multi-point control end; the method for lifting a speaking ban at a video conference applied to a chairman end; or the method for lifting a speaking ban at a video conference applied to a client.

The computer-executable instructions of the present application are executed by a processor or controller, for example, a processor in the above-mentioned device embodiments, which can enable the processor to perform the method for lifting a speaking ban at a video conference, for example, to perform the method steps corresponding to FIGs. 2 to 12 described above.

The embodiment of the present application includes: firstly, a speaking ban request is received from the chairman end, where the speaking ban request carries permission information which allows clients to lift a speaking ban; secondly, a speaking ban notification is sent to the clients according to the speaking ban request, so as to impose a speaking ban on the clients; finally, a speaking notification is sent to the target client according to the speaking ban lifting request and the permission information which allows clients to lift a speaking ban. In the embodiment of the present application, when the chairman end sends a speaking ban request to a multi-point control end, the speaking ban request carries permission information that allows clients to lift a speaking ban, in the case where a client needs to lift the speaking ban, it only needs to send a speaking ban lifting request to the multi-point control end, and the multi-point control end will lift the speaking ban of the corresponding client according to the speaking ban lifting request, there is no need for the chairman end to operate, thereby making the operations convenient and improving efficiency of conference.

It is to be understood by those skilled in the art that all or some of the steps and systems in the methods disclosed above can be implemented as software, firmware, hardware, and suitable combination thereof. Some or all of the physical components can be implemented as software to be executed by a processor, such as a central processor, digital signal processor, or microprocessor, or as hardware, or as an integrated circuit, such as an application specific integrated circuit. Such software can be distributed on computer-readable media, which can include computer storage media (or non-transitory media) and communication media (or transitory media). As is well known to those skilled in the art, the term "computer storage media" includes volatile and nonvolatile, removable and non-removable media implemented in any method or technology for storage of information (such as computer readable instructions, data structures, program modules, or other data). Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and is accessible by a computer. In addition, as is well known to those skilled in the art, communication media typically includes computer readable instructions, data structures, program modules, or other data in a modulated data signal such as a carrier wave or other transport mechanism, and can include any information delivery media.

Several embodiments of the present application are illustrated in detail above, but the present application is not limited to the above embodiments, those skilled in the art can make various equivalent modifications or substitutions without departing from the essence of the present application. The invention is defined in the independent claims.

## Claims

1. A method for lifting a speaking ban at a video conference, applied to a multi-point control end, the multi-point control end being in communication with a chairman end and a plurality of clients, the method comprising:
receiving (S100) a speaking ban request from the chairman end, wherein the speaking ban request carries permission information which allows the clients to lift a speaking ban;
sending (S110), according to the speaking ban request, a speaking ban notification to the clients, so as to impose a speaking ban on the clients; and
sending (S120), in response to receiving a speaking ban lifting request from a target client, a speaking notification to the target client according to the speaking ban lifting request and the permission information, wherein the target client is one or more of the clients.

2. The method according to claim 1, wherein prior to receiving (S100) the speaking ban request from the chairman end, the method further comprises:
enabling (S130) a pre-configured function that allows lifting a speaking ban;
wherein enabling (S130) the pre-configured function that allows lifting a speaking ban comprises:
acquiring (S131) a configuration instruction, so as to configure a function that allows the chairman end and the clients to lift a speaking ban; and
acquiring (S132) an enabling instruction, so as to enable the function that allows the chairman end and the clients to lift a speaking ban.

3. The method according to claim 1, wherein after receiving (S100) the speaking ban request from the chairman end, the method further comprises:
recording (S140) the permission information which allows the clients to lift a speaking ban.

4. The method according to claim 1, wherein receiving the speaking ban lifting request from the target client comprises:
receiving (S121) a request for turning on a corresponding microphone from the target client.

5. The method according to claim 4, wherein sending (S120) the speaking notification to the target client comprises:
sending (S122) the speaking notification to the target client corresponding to the microphone.

6. The method according to claim 5, wherein the multi-point control end comprises a voice function unit and a conference control unit,
receiving (S121) the request for turning on the corresponding microphone from the target client comprises:
receiving and reporting, by the voice function unit, the request for turning on the corresponding microphone from the target client.

7. The method according to claim 6, wherein sending (S122) the speaking notification to the target client corresponding to the microphone comprises:
determining, by the conference control unit, whether the target client is allowed to lift the speaking ban according to the permission information;
in response to that the target client is allowed to lift the speaking ban according to the permission information, sending, by the conference control unit, the speaking notification to the target client corresponding to the microphone.

8. The method according to claim 7, wherein determining whether the target client is allowed to lift the speaking ban according to the permission information comprises:
upon the condition that the speaking ban request carries permission information which allows the target client to lift a speaking ban, determining the target client is allowed to lift the speaking ban; or
upon the condition that speaking ban request does not carry permission information which allows the target client to lift a speaking ban, determining the target client is not allowed to lift the speaking ban.

9. The method according to claim 2, further comprising:
receiving (S134) state information of the target client, wherein the state information represents that a microphone of the target client is in an ON state; and
sending (S135), upon the condition that the multi-point control end is in a state that allows lifting a speaking ban, a conference-participation instruction to the target client according to the state information, such that the target client joins a sound-mixing conference.

10. The method according to claim 2, further comprising:
receiving (S136) change information of the chairman end, and disabling the function that allows lifting a speaking ban according to the change information, wherein the change information represents that the chairman end lifts a speaking ban, is offline, or releases a token.

11. A method for lifting a speaking ban at a video conference, in which a chairman end is in communication with a plurality of clients by a multi-point control end, the method comprising:
the chairman end sending (S200) to the multi-point control end a speaking ban request that carries permission information which allows the clients to lift a speaking ban, such that the multi-point control end sends a speaking notification to a target client according to the permission information and a speaking ban lifting request, wherein the speaking ban lifting request is from the target client, and the target client is one or more of the clients.

12. A method for lifting a speaking ban at a video conference in which clients are in communication with a chairman end by a multi-point control end, the method comprising:
receiving at the clients (S300) a speaking ban notification sent by the multi-point control end, and imposing a speaking ban according to the speaking ban notification, wherein the speaking ban notification is generated by the multi-point control end according to a speaking ban request, and the speaking ban request is sent by the chairman end and carries permission information which allows the clients to lift a speaking ban;
sending from the clients (S310), upon the condition that the clients are in a speaking state, a speaking ban lifting request to the multi-point control end; and
receiving at the clients (S320) a speaking notification which is generated by the multi-point control end according to the speaking ban lifting request and the permission information, and lifting the speaking ban according to the speaking notification.

13. The method according to claim 12, wherein lifting (S320) the speaking ban according to the speaking notification comprises:
turning on (S321) a microphone according to the speaking notification.

14. A device for lifting a speaking ban at a video conference comprising: a memory, a processor, and a computer program stored in the memory and executable on the processor, the computer program, when executed by the processor, implements one of the following:
the method for lifting a speaking ban at a video conference of any one of claims 1 to 10;
the method for lifting a speaking ban at a video conference of claim 11; or
the method for lifting a speaking ban at a video conference of any one of claims 12 to 13.

15. A computer-readable storage medium storing computer-executable instructions, wherein when executed by a computer, the computer-executable instructions are used to execute at least one of the following:
the method for lifting a speaking ban at a video conference of any one of claims 1 to 10;
the method for lifting a speaking ban at a video conference of claim 11; or
the method for lifting a speaking ban at a video conference of any one of claims 12 to 13.

## Patentansprüche

1. Verfahren zum Aufheben eines Redeverbots bei einer Videokonferenz, angewandt auf ein Mehrpunkt-Steuerungsende, wobei das Mehrpunkt-Steuerungsende in Kommunikation mit einem Vorsitzenden-Ende und einer Mehrzahl von Clients steht, wobei das Verfahren umfasst:
Empfangen (S100) einer Redeverbotsanforderung von dem Vorsitzenden-Ende, wobei die Redeverbotsanforderung Berechtigungsinformation trägt, die es den Clients erlaubt, ein Redeverbot aufzuheben;
Senden (S110), gemäß der Redeverbotsanforderung, einer Redeverbotsbenachrichtigung an die Clients, um ein Redeverbot über die Clients zu verhängen; und
Senden (S120), als Reaktion auf das Empfangen einer Redeverbotsaufhebungsanforderung von einem Ziel-Client, einer Redebenachrichtigung an den Ziel-Client gemäß der Redeverbotsaufhebungsanforderung und der Berechtigungsinformation, wobei der Ziel-Client einer oder mehrere der Clients ist.

2. Verfahren nach Anspruch 1, wobei das Verfahren vor dem Empfangen (S100) der Redeverbotsanforderung von dem Vorsitzenden-Ende weiterhin umfasst:
Aktivieren (S130) einer vorkonfigurierten Funktion, die das Aufheben eines Redeverbots erlaubt;
wobei das Aktivieren (S130) der vorkonfigurierten Funktion, die das Aufheben eines Redeverbots erlaubt, umfasst:
Erlangen (S131) einer Konfigurationsanweisung, um eine Funktion zu konfigurieren, die es dem Vorsitzenden-Ende und den Clients erlaubt, ein Redeverbot aufzuheben; und
Erlangen (S132) einer Aktivierungsanweisung, um die Funktion zu aktivieren, die es dem Vorsitzenden-Ende und den Clients erlaubt, ein Redeverbot aufzuheben.

3. Verfahren nach Anspruch 1, wobei das Verfahren nach dem Empfangen (S100) der Redeverbotsanforderung von dem Vorsitzenden-Ende weiterhin umfasst:
Aufzeichnen (S140) der Berechtigungsinformation, die es den Clients erlaubt, ein Redeverbot aufzuheben.

4. Verfahren nach Anspruch 1, wobei das Empfangen der Redeverbotsaufhebungsanforderung von dem Ziel-Client umfasst:
Empfangen (S121) einer Anforderung zum Einschalten eines entsprechenden Mikrofons von dem Ziel-Client.

5. Verfahren nach Anspruch 4, wobei das Senden (S120) der Redebenachrichtigung an den Ziel-Client umfasst:
Senden (S122) der Redebenachrichtigung an den dem Mikrofon entsprechenden Ziel-Client.

6. Verfahren nach Anspruch 5, wobei das Mehrpunkt-Steuerungsende eine Sprachfunktionseinheit und eine Konferenzsteuerungseinheit umfasst,
das Empfangen (S121) der Anforderung zum Einschalten des entsprechenden Mikrofons von dem Ziel-Client umfasst:
Empfangen und Melden, durch die Sprachfunktionseinheit, der Anforderung zum Einschalten des entsprechenden Mikrofons von dem Ziel-Client.

7. Verfahren nach Anspruch 6, wobei das Senden (S122) der Redebenachrichtigung an den dem Mikrofon entsprechenden Ziel-Client umfasst:
Bestimmen, durch die Konferenzsteuerungseinheit, ob es dem Ziel-Client gemäß der Berechtigungsinformation erlaubt ist, das Redeverbot aufzuheben;
als Reaktion darauf, dass es dem Ziel-Client gemäß der Berechtigungsinformation erlaubt ist, das Redeverbot aufzuheben, Senden, durch die Konferenzsteuerungseinheit, der Redebenachrichtigung an den dem Mikrofon entsprechenden Ziel-Client.

8. Verfahren nach Anspruch 7, wobei das Bestimmen, ob es dem Ziel-Client gemäß der Berechtigungsinformation erlaubt ist, das Redeverbot aufzuheben, umfasst:
unter der Bedingung, dass die Redeverbotsanforderung Berechtigungsinformation trägt, die es dem Ziel-Client erlaubt, ein Redeverbot aufzuheben, Bestimmen, dass es dem Ziel-Client erlaubt ist, das Redeverbot aufzuheben; oder
unter der Bedingung, dass die Redeverbotsanforderung keine Berechtigungsinformation trägt, die es dem Ziel-Client erlaubt, ein Redeverbot aufzuheben, Bestimmen, dass es dem Ziel-Client nicht erlaubt ist, das Redeverbot aufzuheben.

9. Verfahren nach Anspruch 2, weiterhin umfassend:
Empfangen (S134) einer Zustandsinformation des Ziel-Clients, wobei die Zustandsinformation darstellt, dass ein Mikrofon des Ziel-Clients in einem EIN-Zustand ist; und
Senden (S135), unter der Bedingung, dass das Mehrpunkt-Steuerungsende in einem Zustand ist, der das Aufheben eines Redeverbots erlaubt, einer Konferenzteilnahmeanweisung an den Ziel-Client gemäß der Zustandsinformation, derart, dass der Ziel-Client an einer Tonmischkonferenz teilnimmt.

10. Verfahren nach Anspruch 2, weiterhin umfassend:
Empfangen (S136) einer Änderungsinformation des Vorsitzenden-Endes und Deaktivieren der Funktion, die das Aufheben eines Redeverbots erlaubt, gemäß der Änderungsinformation, wobei die Änderungsinformation darstellt, dass das Vorsitzenden-Ende ein Redeverbot aufhebt, offline ist oder ein Token freigibt.

11. Verfahren zum Aufheben eines Redeverbots bei einer Videokonferenz, bei dem ein Vorsitzenden-Ende durch ein Mehrpunkt-Steuerungsende in Kommunikation mit einer Mehrzahl von Clients steht, wobei das Verfahren umfasst:
Senden (S200), durch das Vorsitzenden-Ende, an das Mehrpunkt-Steuerungsende einer Redeverbotsanforderung, die Berechtigungsinformation trägt, die es den Clients erlaubt, ein Redeverbot aufzuheben, derart, dass das Mehrpunkt-Steuerungsende eine Redebenachrichtigung gemäß der Berechtigungsinformation und einer Redeverbotsaufhebungsanforderung an einen Ziel-Client sendet, wobei die Redeverbotsaufhebungsanforderung von dem Ziel-Client stammt und der Ziel-Client einer oder mehrere der Clients ist.

12. Verfahren zum Aufheben eines Redeverbots bei einer Videokonferenz, bei dem Clients durch ein Mehrpunkt-Steuerungsende in Kommunikation mit einem Vorsitzenden-Ende stehen, wobei das Verfahren umfasst:
Empfangen an den Clients (S300) einer Redeverbotsbenachrichtigung, die von dem Mehrpunkt-Steuerungsende gesendet wird, und Verhängen eines Redeverbots gemäß der Redeverbotsbenachrichtigung, wobei die Redeverbotsbenachrichtigung von dem Mehrpunkt-Steuerungsende gemäß einer Redeverbotsanforderung erzeugt wird und die Redeverbotsanforderung von dem Vorsitzenden-Ende gesendet wird und Berechtigungsinformation trägt, die es den Clients erlaubt, ein Redeverbot aufzuheben;
Senden von den Clients (S310), unter der Bedingung, dass die Clients in einem Redezustand sind, einer Redeverbotsaufhebungsanforderung an das Mehrpunkt-Steuerungsende; und
Empfangen an den Clients (S320) einer Redebenachrichtigung, die von dem Mehrpunkt-Steuerungsende gemäß der Redeverbotsaufhebungsanforderung und der Berechtigungsinformation erzeugt wird, und Aufheben des Redeverbots gemäß der Redebenachrichtigung.

13. Verfahren nach Anspruch 12, wobei das Aufheben (S320) des Redeverbots gemäß der Redebenachrichtigung umfasst:
Einschalten (S321) eines Mikrofons gemäß der Redebenachrichtigung.

14. Vorrichtung zum Aufheben eines Redeverbots bei einer Videokonferenz, umfassend: einen Speicher, einen Prozessor und ein Computerprogramm, das in dem Speicher gespeichert und auf dem Prozessor ausführbar ist, wobei das Computerprogramm bei Ausführung durch den Prozessor eines der Folgenden implementiert:
das Verfahren zum Aufheben eines Redeverbots bei einer Videokonferenz nach einem der Ansprüche 1 bis 10;
das Verfahren zum Aufheben eines Redeverbots bei einer Videokonferenz nach Anspruch 11; oder
das Verfahren zum Aufheben eines Redeverbots bei einer Videokonferenz nach einem der Ansprüche 12 bis 13.

15. Computerlesbares Speichermedium, das computerausführbare Anweisungen speichert, wobei die computerausführbaren Anweisungen bei Ausführung durch einen Computer verwendet werden, um mindestens eines der Folgenden auszuführen:
das Verfahren zum Aufheben eines Redeverbots bei einer Videokonferenz nach einem der Ansprüche 1 bis 10;
das Verfahren zum Aufheben eines Redeverbots bei einer Videokonferenz nach Anspruch 11; oder
das Verfahren zum Aufheben eines Redeverbots bei einer Videokonferenz nach einem der Ansprüche 12 bis 13.

## Revendications

1. Procédé de levée d'une interdiction de parole lors d'une visioconférence, appliqué à une extrémité de commande multipoint, l'extrémité de commande multipoint étant en communication avec une extrémité de président et une pluralité de clients, le procédé comprenant :
la réception (S100) d'une demande d'interdiction de parole provenant de l'extrémité de président, dans lequel la demande d'interdiction de parole porte une information d'autorisation qui permet aux clients de lever une interdiction de parole ;
l'envoi (S110), selon la demande d'interdiction de parole, d'une notification d'interdiction de parole aux clients, afin d'imposer une interdiction de parole aux clients ; et
l'envoi (S120), en réponse à la réception d'une demande de levée d'interdiction de parole provenant d'un client cible, d'une notification de parole au client cible selon la demande de levée d'interdiction de parole et l'information d'autorisation, dans lequel le client cible est un ou plusieurs des clients.

2. Procédé selon la revendication 1, dans lequel, avant la réception (S100) de la demande d'interdiction de parole provenant de l'extrémité de président, le procédé comprend en outre :
l'activation (S130) d'une fonction préconfigurée qui permet de lever une interdiction de parole ;
dans lequel l'activation (S130) de la fonction préconfigurée qui permet de lever une interdiction de parole comprend :
l'acquisition (S131) d'une instruction de configuration, afin de configurer une fonction qui permet à l'extrémité de président et aux clients de lever une interdiction de parole ; et
l'acquisition (S132) d'une instruction d'activation, afin d'activer la fonction qui permet à l'extrémité de président et aux clients de lever une interdiction de parole.

3. Procédé selon la revendication 1, dans lequel, après la réception (S100) de la demande d'interdiction de parole provenant de l'extrémité de président, le procédé comprend en outre :
l'enregistrement (S140) de l'information d'autorisation qui permet aux clients de lever une interdiction de parole.

4. Procédé selon la revendication 1, dans lequel la réception de la demande de levée d'interdiction de parole provenant du client cible comprend :
la réception (S121) d'une demande de mise en marche d'un microphone correspondant provenant du client cible.

5. Procédé selon la revendication 4, dans lequel l'envoi (S120) de la notification de parole au client cible comprend :
l'envoi (S122) de la notification de parole au client cible correspondant au microphone.

6. Procédé selon la revendication 5, dans lequel l'extrémité de commande multipoint comprend une unité de fonction vocale et une unité de commande de conférence,
la réception (S121) de la demande de mise en marche du microphone correspondant provenant du client cible comprend :
la réception et le signalement, par l'unité de fonction vocale, de la demande de mise en marche du microphone correspondant provenant du client cible.

7. Procédé selon la revendication 6, dans lequel l'envoi (S122) de la notification de parole au client cible correspondant au microphone comprend :
la détermination, par l'unité de commande de conférence, du fait qu'il est permis ou non au client cible de lever l'interdiction de parole selon l'information d'autorisation ;
en réponse au fait qu'il est permis au client cible de lever l'interdiction de parole selon l'information d'autorisation, l'envoi, par l'unité de commande de conférence, de la notification de parole au client cible correspondant au microphone.

8. Procédé selon la revendication 7, dans lequel la détermination du fait qu'il est permis ou non au client cible de lever l'interdiction de parole selon l'information d'autorisation comprend :
à la condition que la demande d'interdiction de parole porte une information d'autorisation qui permet au client cible de lever une interdiction de parole, la détermination qu'il est permis au client cible de lever l'interdiction de parole ; ou
à la condition que la demande d'interdiction de parole ne porte pas d'information d'autorisation qui permet au client cible de lever une interdiction de parole, la détermination qu'il n'est pas permis au client cible de lever l'interdiction de parole.

9. Procédé selon la revendication 2, comprenant en outre :
la réception (S134) d'une information d'état du client cible, dans lequel l'information d'état représente qu'un microphone du client cible est dans un état de MARCHE ; et
l'envoi (S135), à la condition que l'extrémité de commande multipoint soit dans un état qui permet de lever une interdiction de parole, d'une instruction de participation à la conférence au client cible selon l'information d'état, de telle sorte que le client cible rejoigne une conférence de mixage sonore.

10. Procédé selon la revendication 2, comprenant en outre :
la réception (S136) d'une information de changement de l'extrémité de président, et la désactivation de la fonction qui permet de lever une interdiction de parole selon l'information de changement, dans lequel l'information de changement représente que l'extrémité de président lève une interdiction de parole, est hors ligne, ou libère un jeton.

11. Procédé de levée d'une interdiction de parole lors d'une visioconférence, dans lequel une extrémité de président est en communication avec une pluralité de clients par une extrémité de commande multipoint, le procédé comprenant :
l'envoi (S200), par l'extrémité de président, à l'extrémité de commande multipoint, d'une demande d'interdiction de parole qui porte une information d'autorisation qui permet aux clients de lever une interdiction de parole, de telle sorte que l'extrémité de commande multipoint envoie une notification de parole à un client cible selon l'information d'autorisation et une demande de levée d'interdiction de parole, dans lequel la demande de levée d'interdiction de parole provient du client cible, et le client cible est un ou plusieurs des clients.

12. Procédé de levée d'une interdiction de parole lors d'une visioconférence dans lequel des clients sont en communication avec une extrémité de président par une extrémité de commande multipoint, le procédé comprenant :
la réception au niveau des clients (S300) d'une notification d'interdiction de parole envoyée par l'extrémité de commande multipoint, et l'imposition d'une interdiction de parole selon la notification d'interdiction de parole, dans lequel la notification d'interdiction de parole est générée par l'extrémité de commande multipoint selon une demande d'interdiction de parole, et la demande d'interdiction de parole est envoyée par l'extrémité de président et porte une information d'autorisation qui permet aux clients de lever une interdiction de parole ;
l'envoi depuis les clients (S310), à la condition que les clients soient dans un état de parole, d'une demande de levée d'interdiction de parole à l'extrémité de commande multipoint ; et
la réception au niveau des clients (S320) d'une notification de parole qui est générée par l'extrémité de commande multipoint selon la demande de levée d'interdiction de parole et l'information d'autorisation, et la levée de l'interdiction de parole selon la notification de parole.

13. Procédé selon la revendication 12, dans lequel la levée (S320) de l'interdiction de parole selon la notification de parole comprend :
la mise en marche (S321) d'un microphone selon la notification de parole.

14. Dispositif de levée d'une interdiction de parole lors d'une visioconférence, comprenant : une mémoire, un processeur et un programme d'ordinateur stocké dans la mémoire et exécutable sur le processeur, dans lequel le programme d'ordinateur, lorsqu'il est exécuté par le processeur, met en œuvre l'un des éléments suivants :
le procédé de levée d'une interdiction de parole lors d'une visioconférence selon l'une quelconque des revendications 1 à 10 ;
le procédé de levée d'une interdiction de parole lors d'une visioconférence selon la revendication 11 ; ou
le procédé de levée d'une interdiction de parole lors d'une visioconférence selon l'une quelconque des revendications 12 à 13.

15. Support de stockage lisible par ordinateur stockant des instructions exécutables par ordinateur, dans lequel, lorsqu'elles sont exécutées par un ordinateur, les instructions exécutables par ordinateur sont utilisées pour exécuter au moins l'un des éléments suivants :
le procédé de levée d'une interdiction de parole lors d'une visioconférence selon l'une quelconque des revendications 1 à 10 ;
le procédé de levée d'une interdiction de parole lors d'une visioconférence selon la revendication 11 ; ou
le procédé de levée d'une interdiction de parole lors d'une visioconférence selon l'une quelconque des revendications 12 à 13.
